# EUROPEAN PATENT APPLICATION

(11) **EP 4 276 606 A1**
(43) Date of publication of application: **15.11.2023**
(21) Application number: 21917479.4
(22) Date of filing: 08.01.2021
(51) Int. Cl.: G06F 8/75, G06N 20/00

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: KATAOKA, Masahiro, Kawasaki-shi, Kanagawa 211-8588 (JP); NAKANO, Daichi, Kawasaki-shi, Kanagawa 211-8588 (JP); MUKADE, Yuto, Kawasaki-shi, Kanagawa 211-8588 (JP); ONOUE, Satoshi, Kawasaki-shi, Kanagawa 211-8588 (JP)
(74) Representative: Hoffmann Eitle
(86) International application number: PCT/JP2021/000449
(87) International publication number: WO 2022/149252

(57) **Abstract**

An information processing apparatus executes training of a training model based on training data that defines a relationship between a vector that corresponds to a program and a vector that corresponds to each of a plurality of subprograms that constitutes the program. The information processing apparatus calculates, in a case where a program to be analyzed is received, vectors of a plurality of subprograms that corresponds to the program to be analyzed by inputting the program to be analyzed to the training model.

## Description

### FIELD

The present invention relates to an information processing program and the like.

### BACKGROUND

Source programs such as open source software (OSS) are created and completed by experts in programs. Furthermore, experts in programs may create new source programs corresponding to requests of clients by diverting a part of the OSS and combining it with another source program by using their expertise.

Note that, in recent years, since the number of experts in programs is insufficient, efforts have been made to train the experts by giving lectures and program training to students, beginners, and the like.

### CITATION LIST

### PATENT DOCUMENT

Patent Document 1: Japanese Laid-open Patent Publication No. 2020-135135
Patent Document 2: Japanese Laid-open Patent Publication No. 2019-101993
Patent Document 3: Japanese Laid-open Patent Publication No. 2015-106347

### SUMMARY

### [TECHNICAL PROBLEM]

As described above, an expert in programs may create a new source program by analyzing a structure of a source program, decomposing the source program into a plurality of subprograms for each group of functions, and diverting, modifying, and recombining a part of the OSS. However, it is difficult for engineers as students and beginners to create programs by a similar method.

In one aspect, an object of the present invention is to provide an information processing program, an information processing method, and an information processing apparatus capable of analyzing a structure of a source program, decomposing the source program for each function, efficiently diverting, modifying, and recombining the source program.

### [SOLUTION TO PROBLEM]

In a first idea, a computer is caused to execute the following processing. A computer executes training of a training model based on training data that defines a relationship between a vector that corresponds to a program and a vector that corresponds to each of a plurality of subprograms that constitutes the program. The computer calculates, in a case where a program to be analyzed is received, vectors of a plurality of subprograms that corresponds to the program to be analyzed by inputting the program to be analyzed to the training model.

According to an aspect of the embodiments, an information processing program that causes a computer to execute a process, the process includes executing training of a training model based on training data that defines a relationship between a vector that corresponds to a program and a vector that corresponds to each of a plurality of subprograms that constitutes the program; and calculating, in a case where a program to be analyzed is received, vectors of a plurality of subprograms that corresponds to the program to be analyzed by inputting the program to be analyzed to the training model.

### [ADVANTAGEOUS EFFECTS OF INVENTION]

A source program may be efficiently diverted and recombined.

### BRIEF DESCRIPTION OF DRAWINGS

FIG. 1 is a diagram for describing an example of processing of a training phase of an information processing apparatus according to the present first embodiment;
FIG. 2 is a diagram for describing an example of processing of an analysis phase of the information processing apparatus according to the present first embodiment;
FIG. 3 is a functional block diagram illustrating a configuration of the information processing apparatus according to the present first embodiment;
FIG. 4 is a diagram illustrating an example of a data structure of an object program file;
FIG. 5 is a diagram illustrating an example of a data structure of an encoded file;
FIG. 6 is a diagram illustrating an example of a data structure of static dictionary information;
FIG. 7 is a diagram illustrating an example of a data structure of dynamic dictionary information;
FIG. 8 is a diagram illustrating an example of a data structure of a vector table;
FIG. 9A is a diagram illustrating an example of a data structure of a subprogram vector table;
FIG. 9B is a diagram illustrating an example of a data structure of an object program vector table;
FIG. 9C is a diagram illustrating an example of a data structure of an alternative subprogram vector table;
FIG. 9D is a diagram illustrating an example of a data structure of a common routine vector table;
FIG. 10 is a diagram illustrating an example of a data structure of a transposition index;
FIG. 11A is a diagram illustrating an example of a data structure of a subprogram transposition index;
FIG. 11B is a diagram illustrating an example of a data structure of an object program transposition index;
FIG. 11C is a diagram illustrating an example of a data structure of an alternative subprogram transposition index;
FIG. 11D is a diagram illustrating an example of a data structure of a common routine transposition index;
FIG. 12 is a flowchart (1) illustrating a processing procedure of the information processing apparatus according to the present first embodiment;
FIG. 13 is a flowchart (2) illustrating a processing procedure of the information processing apparatus according to the present first embodiment;
FIG. 14A is a diagram for describing hierarchy and granularity of subprograms, subroutines, and the like that constitute an object program;
FIG. 14B is a diagram for describing relationships between vectors of the respective subprograms that constitute the object program;
FIG. 15 is a diagram for describing an example of processing of a training phase of an information processing apparatus according to the present second embodiment;
FIG. 16 is a diagram for describing processing of an analysis phase of the information processing apparatus according to the present second embodiment;
FIG. 17 is a functional block diagram illustrating a configuration of the information processing apparatus according to the present second embodiment;
FIG. 18 is a flowchart illustrating a processing procedure of the information processing apparatus according to the present second embodiment; and
FIG. 19 is a diagram illustrating an example of a hardware configuration of a computer that implements functions similar to those of the information processing apparatuses of the embodiments.

### DESCRIPTION OF EMBODIMENTS

Hereinafter, embodiments of an information processing program, an information processing method, and an information processing apparatus disclosed in the present application will be described in detail with reference to the drawings. Note that the embodiments do not limit the present invention.

### [First Embodiment]

An example of processing of an information processing apparatus according to the present first embodiment will be described. It is assumed that the information processing apparatus according to the present first embodiment executes, by preprocessing, processing of calculating a vector of an open source software (OSS) program and processing of calculating each vector of each subprogram (alternative subprogram) constituting an object program (hereinafter, a program to be analyzed or developed is referred to as an object program). Note that it is assumed that a region of each subprogram constituting the object program is specified in advance by tag information or the like.

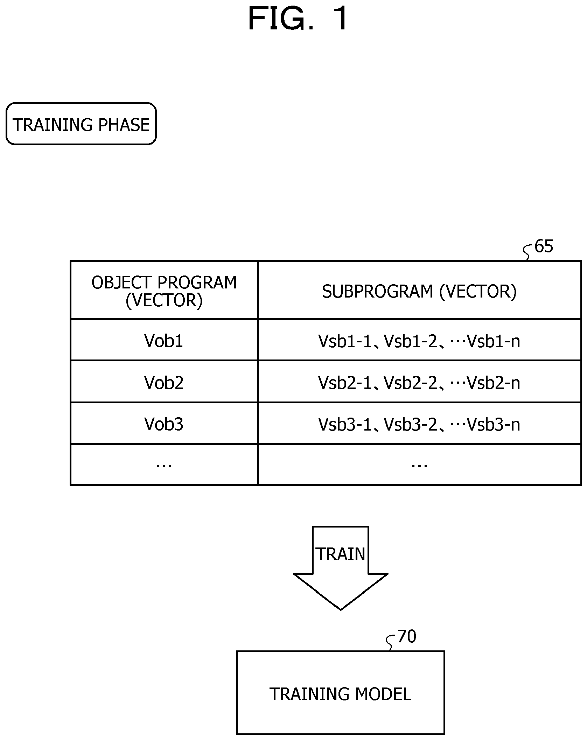

FIG. 1 is a diagram for describing an example of processing of a training phase of the information processing apparatus according to the present first embodiment. As illustrated in FIG. 1, the information processing apparatus executes training of a training model 70 by using training data 65. The training model 70 corresponds to a convolutional neural network (CNN), a recurrent neural network (RNN), or the like.

The training data 65 defines a relationship between a vector of the object program and a vector of each subprogram constituting the object program. For example, the vector of the object program corresponds to input data, and the vectors of the plurality of subprograms are correct answer values.

The information processing apparatus executes training by back propagation so that output when the vector of the object program is input to the training model 70 approaches the vector of each subprogram. The information processing apparatus adjusts parameters of the training model 70 (executes machine learning) by repeatedly executing the processing described above based on the relationship between the vector of the object program and the vectors of the plurality of subprograms included in the training data 65.

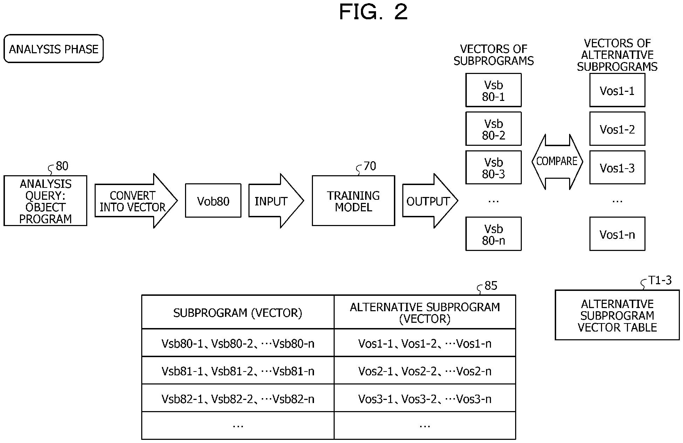

FIG. 2 is a diagram for describing an example of processing of an analysis phase of the information processing apparatus according to the present first embodiment. In the analysis phase, the information processing apparatus executes the following processing by using the training model 70 trained in the training phase.

When receiving an analysis query 80 specifying the object program, the information processing apparatus converts the object program of the analysis query 80 into a vector Vob80. The information processing apparatus calculates a plurality of vectors (Vsb80-1, Vsb80-2, Vsb80-3,... Vsb80-n) corresponding to the respective subprograms by inputting the vector Vob80 to the training model 70.

The information processing apparatus compares similarity between a plurality of vectors (Vos1-1, Vos1-2, Vos1-3,... Vos1-n) corresponding to the respective alternative subprograms stored in an alternative subprogram vector table T1-3 and the plurality of vectors (Vsb80-1, Vsb80-2, Vsb80-3,... Vsb80-n) corresponding to the respective subprograms, and analyzes subprograms and alternative subprograms that are similar to each other. The information processing apparatus registers the vectors of the subprograms and the vectors of the alternative subprograms that are similar to each other in a management table 85 in association with each other.

As described above, the information processing apparatus according to the present first embodiment executes, in advance, training of the training model 70 based on the training data 65 that defines the relationship between the vector of the object program and the vector of each subprogram. The information processing apparatus calculates the vector of each subprogram corresponding to the object program of the analysis query by inputting the vector of the analysis query to the trained training model 70. By using the vector of each subprogram output from the training model 70, it is possible to easily executes detection of the alternative subprograms, such as OSS, that are similar to and may be alternatives of the subprograms.

Furthermore, an expert creates alternative programs in advance, and a beginner inputs an object program created by the beginner to the information processing apparatus, so that alternative programs that may be replaced with subprograms included in the object program created by the beginner may be specified.

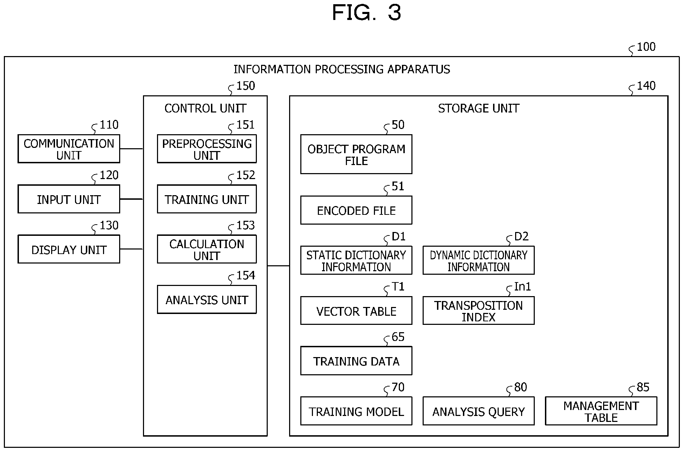

Next, an example of a configuration of the information processing apparatus according to the present first embodiment will be described. FIG. 3 is a functional block diagram illustrating the configuration of the information processing apparatus according to the present first embodiment. As illustrated in FIG. 3, this information processing apparatus 100 includes a communication unit 110, an input unit 120, a display unit 130, a storage unit 140, and a control unit 150.

The communication unit 110 is wiredly or wirelessly coupled to an external device or the like, and exchanges information with the external device or the like. For example, the communication unit 110 is implemented by a network interface card (NIC) or the like. The communication unit 110 may be coupled to a network (not illustrated).

The input unit 120 is an input device that inputs various types of information to the information processing apparatus 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 includes an object program file 50 and an encoded file 51. The storage unit 140 includes static dictionary information D1 and dynamic dictionary information D2. The storage unit 140 includes a vector table T1, a transposition index In1, the training data 65, the training model 70, the analysis query 80, and the management table 85.

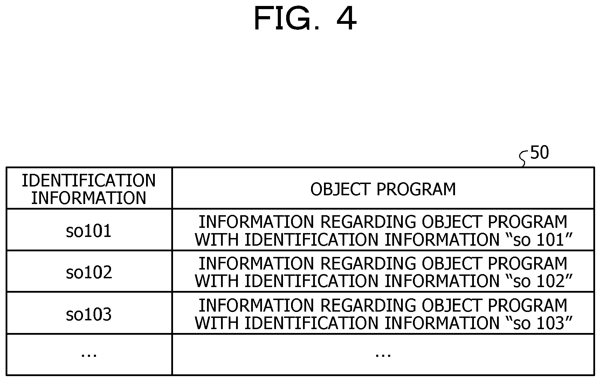

The object program file 50 is a file including various object programs such as OSS. FIG. 4 is a diagram illustrating an example of a data structure of the object program file. As illustrated in FIG. 4, the object program file 50 associates identification information and the object program with each other. The identification information is information that uniquely identifies the object program. The object program is character string data that is input in a programming language and represents a computer program. Each object program corresponds to a source code such as open source software (OSS). The object program includes a reserved word, a variable, and the like.

Furthermore, it is assumed that, in the object program registered in the object program file 50, a region of a plurality of subprograms constituting the object program, a region of alternative subprograms, and a region of common routines are set to be distinguishable. For example, the region of the subprograms, the region of the alternative subprograms, and the region of the common routines are tagged. The common routine indicates a code (character string data) common between the subprogram and the alternative subprogram.

In the present first embodiment, the description will be made by distinguishing the subprogram and the alternative program from each other, but the subprogram and the alternative program may not be distinguished from each other.

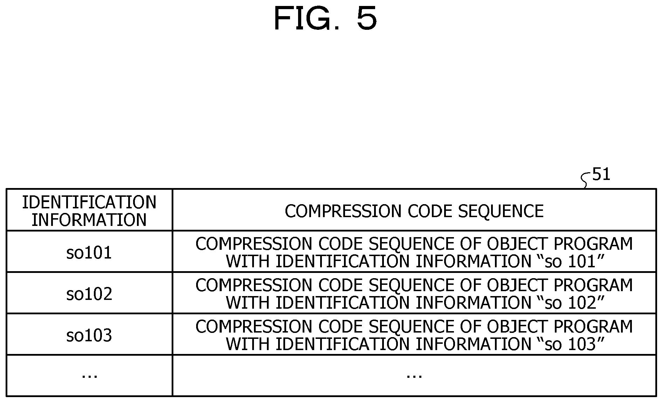

The encoded file 51 is a file that holds the object program encoded in units of reserved words, variables, and the like. FIG. 5 is a diagram illustrating an example of a data structure of the encoded file. As illustrated in FIG. 5, this encoded file 51 associates identification information and a compression code sequence with each other. The identification information is information that uniquely identifies the object program to be encoded. The compression code sequence indicates the object program encoded in units of reserved words, variables, and the like.

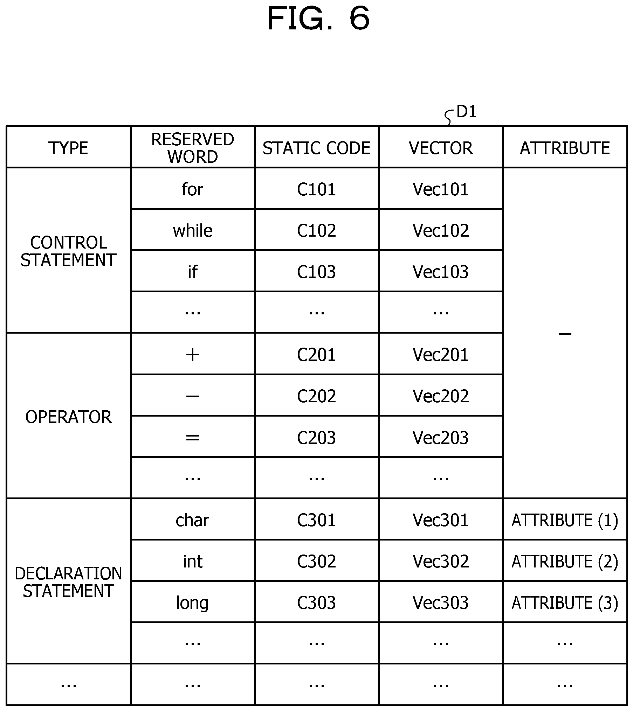

The static dictionary information D1 is dictionary information defining a static code corresponding to a reserved word. FIG. 6 is a diagram illustrating an example of a data structure of the static dictionary information. As illustrated in FIG. 6, this static dictionary information D1 associates a type, a reserved word, a static code, and a vector with each other. The type indicates a type of the reserved word. For example, the type of the reserved word includes a control statement, an operator, a declaration statement, and the like. The reserved word indicates a character string corresponding to the reserved word. The static code is a static code corresponding to the corresponding reserved word. The vector is a vector assigned to the static code. It is assumed that each static code included in the static dictionary information D1 is subjected to Poincare embeddings in advance and is assigned the vector.

In the static dictionary information D1, an attribute is associated with the declaration statement. The declaration statement is described at a position before a variable, and is used for the purpose of determining an attribute of the variable.

For the Poincare Embeddings, for example, a technology described in Non-Patent Document "Valentin Khrulkov1 et al. "Hyperbolic Image Embeddings" Cornell University, April 3, 2019", and the like may be used. In the Poincare embeddings, a vector is assigned according to an embedded position in a Poincare space, and furthermore, the more similar information is, the closer the positions where information is embedded are. The information processing apparatus 100 embeds the static code in the Poincare space in advance, and calculates the vector for the static code in advance.

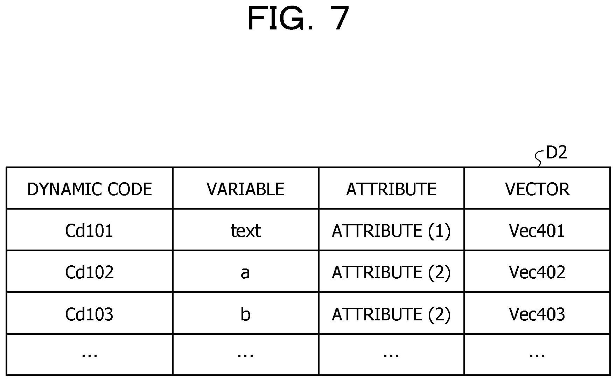

The dynamic dictionary information D2 is dictionary information that holds a dynamic code of a variable not defined in the static dictionary information D1. FIG. 7 is a diagram illustrating an example of a data structure of the dynamic dictionary information. As illustrated in FIG. 7, the dynamic dictionary information D2 associates a dynamic code, a variable, an attribute, and a vector with each other. The dynamic code is a code dynamically assigned to the variable at the time of dynamic encoding. A plurality of unique dynamic codes is secured in advance, and every time a variable (variable not registered in the dynamic dictionary information D2) is detected from a source code, any one dynamic code is assigned to the variable from unassigned dynamic codes. The variable is a variable detected from the source code. The attribute indicates an attribute added to the dynamic code.

The vectors in FIG. 7 are vectors assigned to the dynamic codes. The information processing apparatus 100 embeds the respective dynamic codes in the Poincare space based on the attributes added to the dynamic codes. The information processing apparatus embeds the respective dynamic codes to which the same attributes are assigned at close positions in the Poincare space, and assigns vectors according to the positions to the dynamic codes. With this configuration, accuracy of the vector of the variable may be improved.

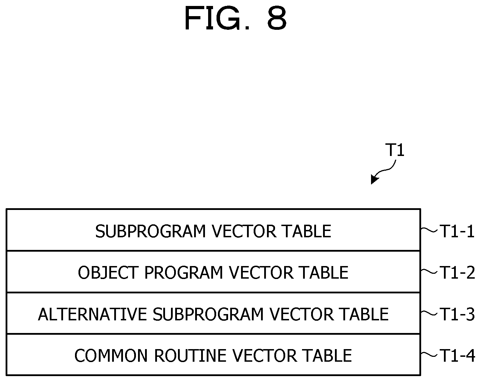

The vector table T1 is a table that holds each vector of the subprogram, the object program, the alternative subprogram, and the common routine. FIG. 8 is a diagram illustrating an example of a data structure of the vector table. As illustrated in FIG. 8, this vector table T1 includes a subprogram vector table T1-1, an object program vector table T1-2, the alternative subprogram vector table T1-3, and a common routine vector table T1-4.

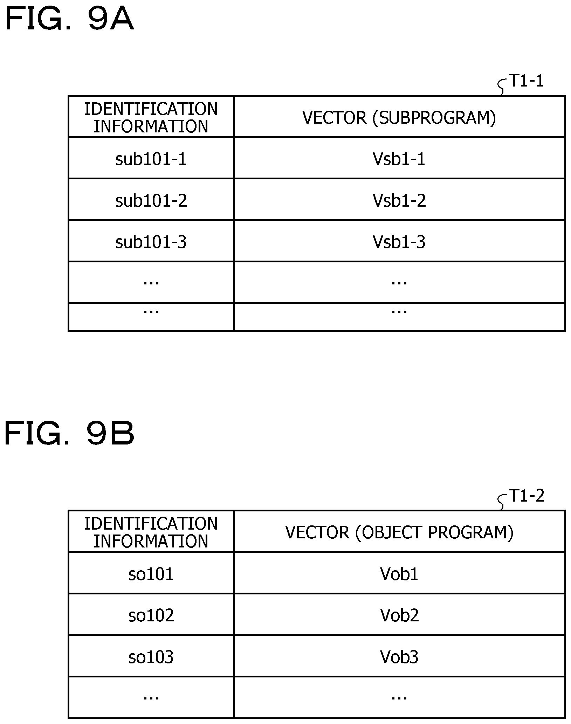

The subprogram vector table T1-1 is a table that holds the vectors of the subprograms. FIG. 9A is a diagram illustrating an example of a data structure of the subprogram vector table. As illustrated in FIG. 9A, the subprogram vector table T1-1 associates identification information and the vector with each other. The identification information is information that uniquely identifies the subprogram. The vector is the vector of the subprogram. The vector of the subprogram has a value obtained by integrating vectors assigned to reserved words, variables, and the like (static codes of the reserved words, dynamic codes of the variables) constituting the subprogram.

The object program vector table T1-2 is a table that holds the vectors of the object programs. FIG. 9B is a diagram illustrating an example of a data structure of the object program vector table. As illustrated in FIG. 9B, the object program vector table T1-2 associates identification information and the vector with each other. The identification information is information that uniquely identifies the object program. The vector is the vector of the object program. The vector of the object program has a value obtained by integrating the vectors of the subprograms (or alternative subprograms) constituting the object program.

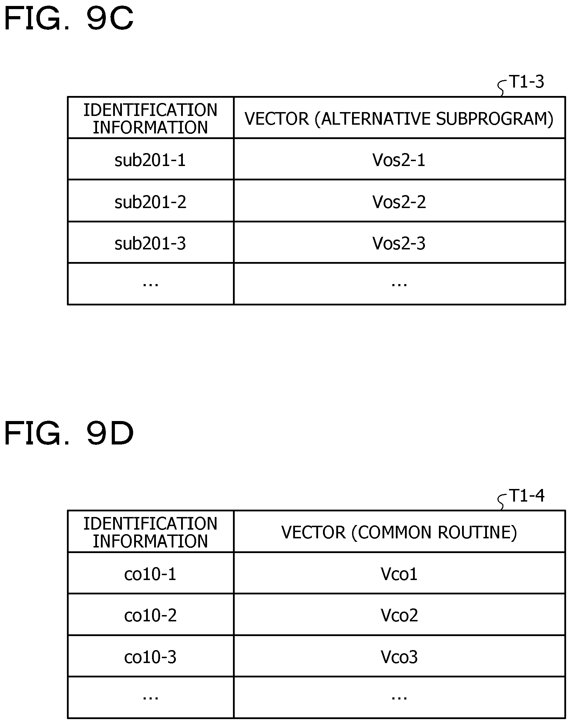

The alternative subprogram vector table T1-3 is a table that holds the vectors of the alternative subprograms. FIG. 9C is a diagram illustrating an example of a data structure of the alternative subprogram vector table. As illustrated in FIG. 9C, the alternative subprogram vector table T1-3 associates identification information and the vector with each other. The identification information is information that uniquely identifies the alternative subprogram. The vector is the vector of the alternative subprogram. The vector of the alternative subprogram has a value obtained by integrating vectors assigned to reserved words, variables, and the like (static codes of the reserved words, dynamic codes of the variables) constituting the alternative subprogram.

The common routine vector table T1-4 is a table that holds the vectors of the common routines. FIG. 9D is a diagram illustrating an example of a data structure of the common routine vector table. As illustrated in FIG. 9D, the common routine vector table T1-4 associates identification information and the vector with each other. The identification information is information that uniquely identifies the common routine. The vector is the vector of the common routine. The vector of the common routine has a value obtained by integrating vectors assigned to reserved words, variables, and the like (static codes of the reserved words, dynamic codes of the variables) constituting the common routine.

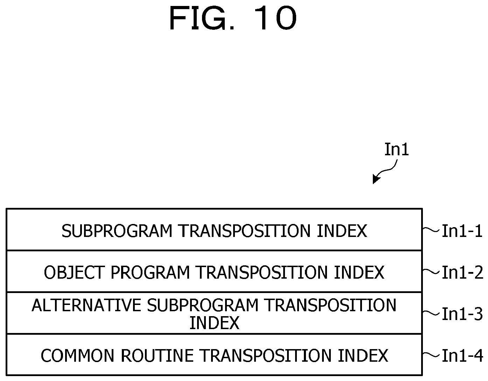

The transposition index In1 is a table that holds each transposition index of the subprogram, the object program, the alternative subprogram, and the common routine. FIG. 10 is a diagram illustrating an example of a data structure of the transposition index. As illustrated in FIG. 10, this transposition index In1 includes a subprogram transposition index In1-1, an object program transposition index In1-2, an alternative subprogram transposition index In1-3, and a common routine transposition index In1-4.

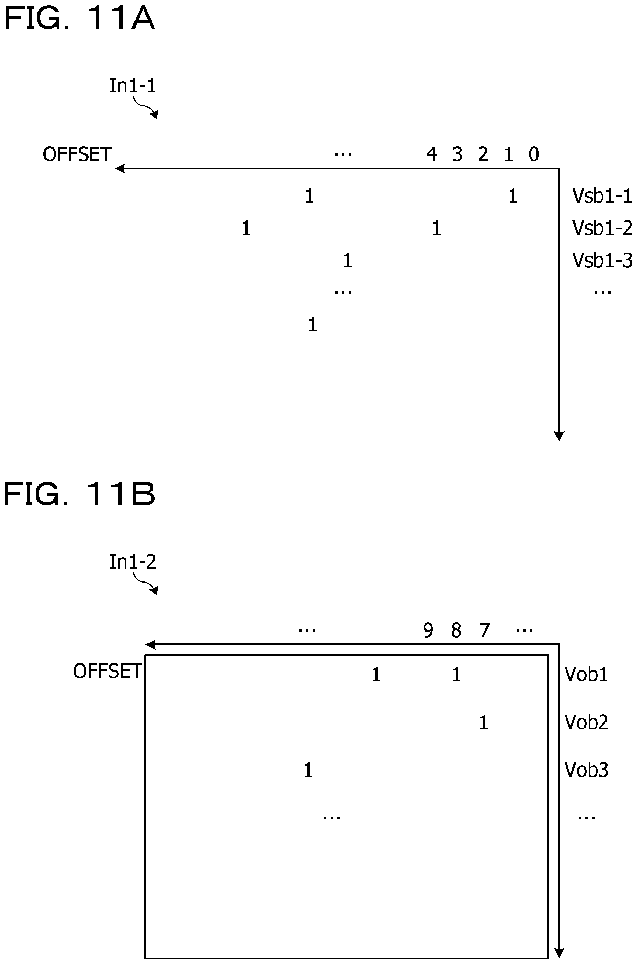

The subprogram transposition index In1-1 associates a position of a code sequence constituting the subprogram (position of the encoded file 51) and the vector of the subprogram with each other. FIG. 11A is a diagram illustrating an example of a data structure of the subprogram transposition index. As illustrated in FIG. 11A, a horizontal axis of the subprogram transposition index In1-1 is an axis corresponding to an offset. A vertical axis of the subprogram transposition index In1-1 is an axis corresponding to the vector of the subprogram. The subprogram transposition index In1-1 is indicated by a bitmap of "0" or °1", and all bitmaps are set to "0" in an initial state.

For example, an offset of a code at the beginning of the encoded file 51 is set to "0". In a case where a code sequence of a subprogram with a vector "Vsb1-1" is included at a second position from the beginning of the encoded file 51, a bit at a position where a column of an offset "1" in the subprogram transposition index In1-1 intersects with a row of the vector "Vsb1-1" is "1".

The object program transposition index In1-2 associates a position of a code sequence constituting the object program (position of the encoded file 51) and the vector of the object program with each other. FIG. 11B is a diagram illustrating an example of a data structure of the object program transposition index. As illustrated in FIG. 11B, a horizontal axis of the object program transposition index In1-2 is an axis corresponding to an offset. A vertical axis of the object program transposition index In1-2 is an axis corresponding to the vector of the object program. The object program transposition index In1-2 is indicated by a bitmap of "0" or "1", and all bitmaps are set to "0" in an initial state.

For example, the offset of the code at the beginning of the encoded file 51 is set to "0". In a case where a code sequence of an object program with a vector "Vob1" is included at a ninth position from the beginning of the encoded file 51, a bit at a position where a column of an offset "8" in the object program transposition index In1-2 intersects with a row of the vector "Vob1" is "1".

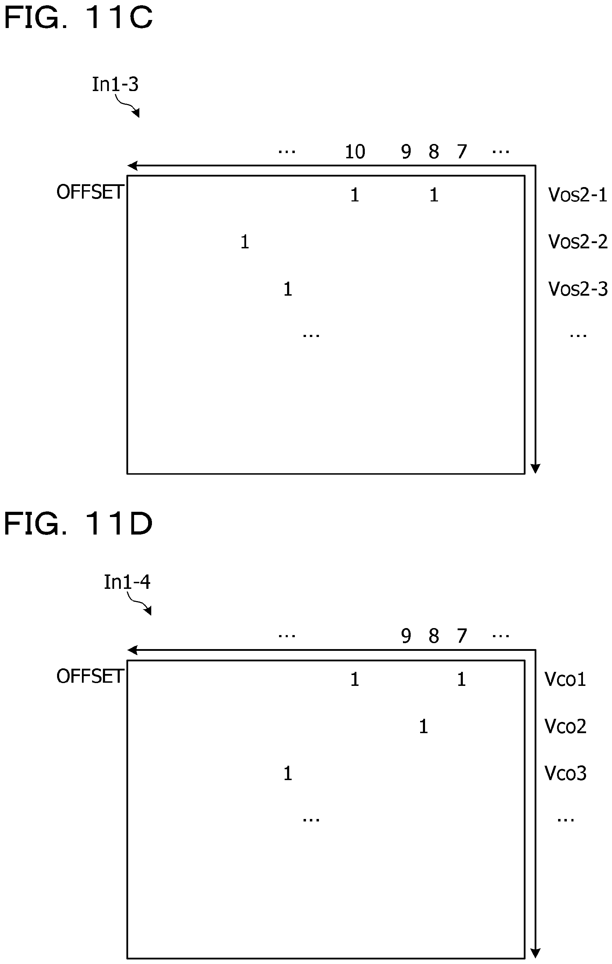

The alternative subprogram transposition index In1-3 associates a position of a code sequence constituting the alternative subprogram (position of the encoded file 51) and the vector of the alternative subprogram with each other. FIG. 11C is a diagram illustrating an example of a data structure of the alternative subprogram transposition index. As illustrated in FIG. 11C, a horizontal axis of the alternative subprogram transposition index In1-3 is an axis corresponding to an offset. A vertical axis of the alternative subprogram transposition index In1-3 is an axis corresponding to the vector of the alternative subprogram. The alternative subprogram transposition index In1-3 is indicated by a bitmap of "0" or °1", and all bitmaps are set to "0" in an initial state.

For example, the offset of the code at the beginning of the encoded file 51 is set to "0". In a case where a code sequence of an alternative subprogram with a vector "Vos2-1" is included at a ninth position from the beginning of the encoded file 51, a bit at a position where a column of an offset "1" in the alternative subprogram transposition index In1-3 intersects with a row of the vector "Vos2-1" is "1".

The common routine transposition index In1-4 associates a position of a code sequence constituting the common routine (position of the encoded file 51) and the vector of the common routine with each other. FIG. 11D is a diagram illustrating an example of a data structure of the common routine transposition index. As illustrated in FIG. 11D, a horizontal axis of the common routine transposition index In1-4 is an axis corresponding to an offset. A vertical axis of the common routine transposition index In1-4 is an axis corresponding to the vector of the common routine. The common routine transposition index In1-4 is indicated by a bitmap of "0" or "1", and all bitmaps are set to "0" in an initial state.

For example, the offset of the code at the beginning of the encoded file 51 is set to "0". In a case where a code sequence of a common routine with a vector "Vco1" is included at an eighth position from the beginning of the encoded file 51, a bit at a position where a column of an offset "1" in the common routine transposition index In1-4 intersects with a row of the vector "Vco1" is "1".

The description returns to FIG. 3. The training data 65 defines a relationship between the vector of the object program and the vectors of the plurality of subprograms constituting the object program. A data structure of the training data 65 corresponds to the data structure of the training data 65 described with reference to FIG. 1.

The training model 70 is a model corresponding to a CNN, an RNN, or the like, and set with parameters.

The analysis query 80 includes information regarding the object program to be analyzed for the alternative subprograms.

The management table 85 holds the vectors of the subprograms and the vectors of the alternative subprograms that are similar to each other in association with each other. A data structure of the management table 85 corresponds to the data structure of the management table 85 described with reference to FIG. 2.

The control unit 150 includes a preprocessing unit 151, a training unit 152, a calculation unit 153, and an analysis unit 154. The control unit 150 is implemented by, for example, a central processing unit (CPU) or a micro processing unit (MPU). Furthermore, the control unit 150 may be executed by, for example, an integrated circuit such as an application specific integrated circuit (ASIC) or a field programmable gate array (FPGA).

The preprocessing unit 151 calculates the vector of the subprogram, the vector of the object program, and the like by executing each type of the following processing.

An example of processing of generating the encoded file 51 by the preprocessing unit 151 will be described. The preprocessing unit 151 acquires the object program from the object program file 50 and executes morphological analysis to divide the object program into a plurality of reserved words and variables. The preprocessing unit 151 repeatedly executes the processing described above for each object program stored in the object program file 50.

After dividing the object program, the preprocessing unit 151 performs processing of assigning static codes and dynamic codes to the reserved words and the variables included in the division result. The preprocessing unit 151 compares the reserved word of the object program with the static dictionary information D1, specifies the static code corresponding to the reserved word, and assigns the static code to the reserved word.

The preprocessing unit 151 compares the variable of the object program with the dynamic dictionary information D2, and determines whether or not the corresponding variable is already registered in the dynamic dictionary information D2. In a case where the corresponding variable is already registered in the dynamic dictionary information D2, the preprocessing unit 151 assigns the registered dynamic code to the variable.

In a case where the corresponding variable is not registered in the dynamic dictionary information D2, the preprocessing unit 151 assigns an unassigned dynamic code to the corresponding variable. Furthermore, in a case where there is a declaration statement before the variable, the preprocessing unit 151 specifies an attribute corresponding to the declaration statement based on the static dictionary information D1. For example, in a case where the attribute of the declaration statement before the variable is "attribute (1)", the attribute of the variable is "attribute (1)". The preprocessing unit 151 registers the variable, the dynamic code assigned to the variable, and the specified attribute in the dynamic dictionary information D2 in association with each other.

The preprocessing unit 151 generates compression codes by repeatedly executing the processing described above for each reserved word and each variable included in the division result of the object program. The preprocessing unit 151 registers the identification information of the object program and the compression code sequence in the encoded file 51 in association with each other.

It is assumed that the compression code sequence of the object program includes a compression code sequence of the subprogram (or alternative subprogram) and a compression code sequence of the common routine. It is assumed that, when encoding the object program (when assigning the static code or the dynamic code), the preprocessing unit 151 makes it possible to distinguish the compression code sequence of the subprogram (or alternative subprogram) and the compression code sequence of the common routine based on the tag information set in the object program file 50, in advance.

The preprocessing unit 151 calculates, in advance, a vector of each static code by executing the Poincare embeddings on each static code of the static dictionary information D1 in advance.

The preprocessing unit 151 executes the Poincare embeddings on the dynamic code registered in the dynamic dictionary information D2 and calculates a vector of each dynamic code. When embedding the dynamic codes in the Poincare space, the preprocessing unit 151 specifies attributes added to the dynamic codes, adjusts embedding positions such that dynamic codes to which the same attributes to each other are assigned are embedded at close positions in the Poincare space, and specifies vectors according to the positions as the vectors of the dynamic codes.

The preprocessing unit 151 compares the compression code sequence included in the subprogram with the static dictionary information D1 and the dynamic dictionary information D2, and specifies the vector of the static code and the vector of the dynamic code included in the subprogram. The preprocessing unit 151 calculates the vector of the subprogram by integrating the respective vectors included in the subprogram.

The preprocessing unit 151 registers the identification information of the subprogram and the vector of the subprogram in the subprogram vector table T1-1 in association with each other. As the identification information of the subprogram, the preprocessing unit 151 may use information set in the tag information, or may assign unique identification information. The preprocessing unit 151 registers "1" at a corresponding portion of the subprogram transposition index In1-1 based on the offset of the subprogram of the encoded file 51 and the vector of the subprogram.

The preprocessing unit 151 compares the compression code sequence included in the alternative subprogram with the static dictionary information D1 and the dynamic dictionary information D2, and specifies the vector of the static code and the vector of the dynamic code included in the alternative subprogram. The preprocessing unit 151 calculates the vector of the alternative subprogram by integrating the respective vectors included in the alternative subprogram.

The preprocessing unit 151 registers the identification information of the alternative subprogram and the vector of the alternative subprogram in the alternative subprogram vector table T1-3 in association with each other. As the identification information of the alternative subprogram, the preprocessing unit 151 may use information set in the tag information, or may assign unique identification information. The preprocessing unit 151 registers "1" at a corresponding portion of the alternative subprogram transposition index In1-3 based on the offset of the alternative subprogram of the encoded file 51 and the vector of the alternative subprogram.

The preprocessing unit 151 calculates the vector of the object program by specifying the vectors of the subprograms (or alternative subprograms) included in the object program and integrating the respective vectors included in the object program.

The preprocessing unit 151 registers the identification information of the object program and the vector of the object program in the object program vector table T1-2 in association with each other. The preprocessing unit 151 registers "1" at a corresponding portion of the object program transposition index In1-2 based on the offset of the object program of the encoded file 51 and the vector of the object program.

The preprocessing unit 151 compares the compression code sequence included in the common routine with the static dictionary information D1 and the dynamic dictionary information D2, and specifies the vector of the static code and the vector of the dynamic code included in the common routine. The preprocessing unit 151 calculates the vector of the common routine by integrating the respective vectors included in the common routine.

The preprocessing unit 151 registers the identification information of the common routine and the vector of the common routine in the common routine vector table T1-4 in association with each other. As the identification information of the common routine, the preprocessing unit 151 may use information set in the tag information, or may assign unique identification information. The preprocessing unit 151 registers "1" at a corresponding portion of the common routine transposition index In 1-4 based on the offset of the common routine of the encoded file 51 and the vector of the common routine.

The preprocessing unit 151 generates the vector table T1 and the transposition index In1 by repeatedly executing the processing described above for each object program, the subprogram (or alternative subprogram) included in the object program, and the common routine.

Furthermore, the preprocessing unit 151 registers, in the training data 65, the relationship between the vector of the object program and the vectors of the plurality of subprograms (or alternative subprograms) included in the object program.

The training unit 152 executes training of the training model 70 by using the training data 65. Processing of the training unit 152 corresponds to the processing described with reference to FIG. 1. The training unit 152 acquires, from the training data 65, a set of the vector of the object program and the vectors of the respective subprograms corresponding to the vector of the object program. The training unit 152 adjusts the parameters of the training model 70 by executing training by back propagation so that a value of output of the training model 70 in a case where the vector of the object program is input to the training model 70 approaches a value of the vector of each subprogram.

The training unit 152 executes training of the training model 70 by repeatedly executing the processing described above for the set of the vector of the object program and the vectors of the respective subprograms (alternative subprograms) in the training data 65.

The calculation unit 153 calculates, in the case of receiving specification of the analysis query 80, the vectors of the respective subprograms included in the object program of the analysis query 80 by using the trained training model 70. Processing of the calculation unit 153 corresponds to the processing described with reference to FIG. 2. The calculation unit 153 may receive the analysis query 80 from the input unit 120, or from an external device via the communication unit 110.

The calculation unit 153 executes morphological analysis on the object program included in the analysis query 80 to divide the object program into a plurality of reserved words and variables. The calculation unit 153 compares the reserved words as the division result with the static dictionary information D1, and specifies vectors assigned to static codes of the reserved words. The calculation unit 153 compares the variables as the division result with the dynamic dictionary information D2, and specifies vectors assigned to dynamic codes of the variables. The calculation unit 153 calculates a vector V80 of the object program included in the analysis query 80 by integrating the respective vectors that are specified.

The calculation unit 153 calculates a plurality of vectors corresponding to the respective subprograms by inputting the vector V80 to the training model 70. The calculation unit 153 outputs the calculated vectors of the respective subprograms to the analysis unit 154.

In the following description, each of the vectors of the respective subprograms calculated by the calculation unit 153 is referred to as a "calculated vector".

The analysis unit 154 searches for information regarding an alternative subprogram having a vector similar to the calculated vector based on the calculated vector. Based on a search result, the analysis unit 154 registers the vector of each subprogram constituting the object program and the vector of each alternative subprogram similar to the vector of each subprogram (the following similar vector) in the management table 85 in association with each other.

For example, the analysis unit 154 calculates each distance between the calculated vector and each vector included in the alternative subprogram vector table T1-3, and specifies a vector whose distance to the calculated vector is less than a threshold. A vector included in the alternative subprogram vector table T1-3, whose distance to the calculated vector is less than the threshold, is the "similar vector". The analysis unit 154 may output information of the management table 85 to the display unit 130 for display.

Furthermore, the analysis unit 154 may output the subprograms and the alternative subprograms included in the management table 85 to the display unit 130 for display. For example, the analysis unit 154 obtains the subprograms and the alternative subprograms by executing the following processing.

The analysis unit 154 acquires the compression code sequence of the subprogram from the encoded file 51 based on the vector of the subprogram and the subprogram transposition index In1-1. The analysis unit 154 decodes the compression code sequence of the subprogram based on the static dictionary information D1 and the dynamic dictionary information D2.

The analysis unit 154 acquires the compression code sequence of the alternative subprogram from the encoded file 51 based on the vector of the alternative subprogram and the alternative subprogram transposition index In1-3. The analysis unit 154 decodes the compression code sequence of the alternative subprogram based on the static dictionary information D1 and the dynamic dictionary information D2.

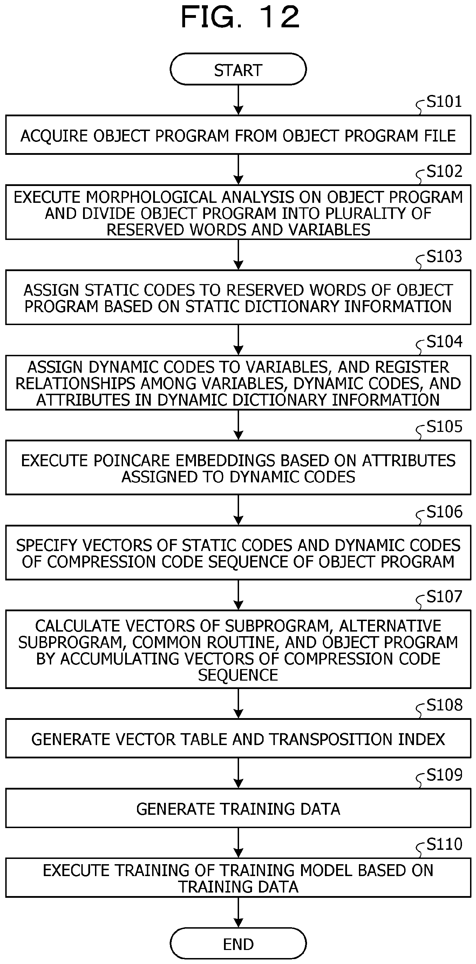

Next, an example of a processing procedure of the information processing apparatus 100 according to the present first embodiment will be described. FIG. 12 is a flowchart (1) illustrating the processing procedure of the information processing apparatus according to the present first embodiment. As illustrated in FIG. 12, the preprocessing unit 151 of the information processing apparatus 100 acquires an object program from the object program file 50 (Step S101).

The preprocessing unit 151 executes morphological analysis on the object program and decomposes the object program into a plurality of reserved words and variables (Step S102). The preprocessing unit 151 assigns static codes to the reserved words of the object program based on the static dictionary information D1 (Step S103).

The preprocessing unit 151 assigns dynamic codes to the variables, and registers relationships among the variables, the dynamic codes, and attributes in the dynamic dictionary information D2 (Step S104). The preprocessing unit 151 executes Poincare embeddings based on the attributes assigned to the dynamic codes (Step S105).

The preprocessing unit 151 specifies vectors of the static codes and the dynamic codes of a compression code sequence of the object program (Step S106). The preprocessing unit 151 calculates vectors of a subprogram, an alternative subprogram, a common routine, and the object program by accumulating the vectors of the compression code sequence (Step S107).

The preprocessing unit 151 generates the vector table T1 and the transposition index In1 (Step S108). The preprocessing unit 151 generates the training data 65 (Step S109). The training unit 152 of the information processing apparatus 100 executes training of the training model 70 based on the training data 65 (Step S110).

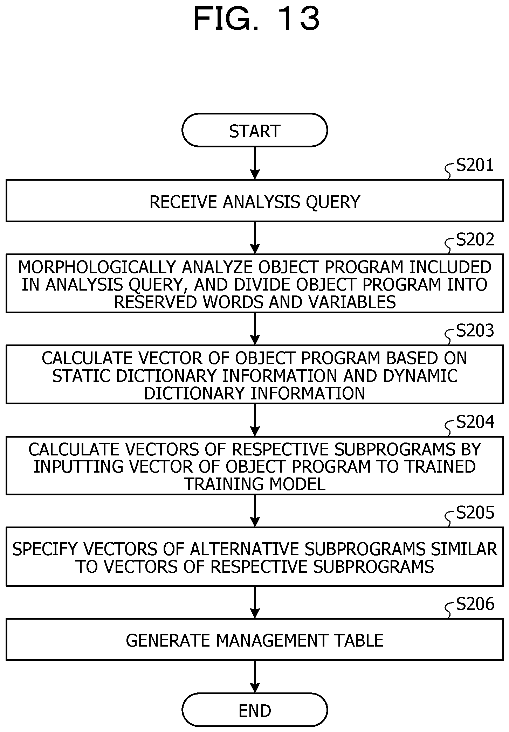

FIG. 13 is a flowchart (2) illustrating a processing procedure of the information processing apparatus according to the present first embodiment. The calculation unit 153 of the information processing apparatus 100 receives the analysis query 80 (Step S201). The calculation unit 153 morphologically analyzes an object program included in the analysis query 80, and divides the object program into reserved words and variables (Step S202).

The calculation unit 153 calculates a vector of the object program based on the static dictionary information D1 and the dynamic dictionary information D2 (Step S203). The calculation unit 153 calculates vectors of the respective subprograms by inputting the vector of the object program to the trained training model 70 (Step S204).

The analysis unit 154 of the information processing apparatus 100 specifies vectors of alternative subprograms similar to the vectors of the respective subprograms (Step S205). The analysis unit 154 associates the vectors of the subprograms and the vectors of the alternative subprograms that are similar to each other with each other to generate the management table 85 (Step S206).

Next, an effect of the information processing apparatus 100 according to the present first embodiment will be described. The information processing apparatus 100 executes, in advance, training of the training model 70 based on the training data 65 that defines the relationship between the vector of the object program and the vectors of the respective subprograms. The information processing apparatus 100 calculates the vectors of the respective subprograms corresponding to the object program of the analysis query by inputting the vector of the analysis query to the trained training model 70. By using the vectors of the respective subprograms output from the training model 70, it is possible to easily execute detection of the alternative subprograms similar to the subprograms.

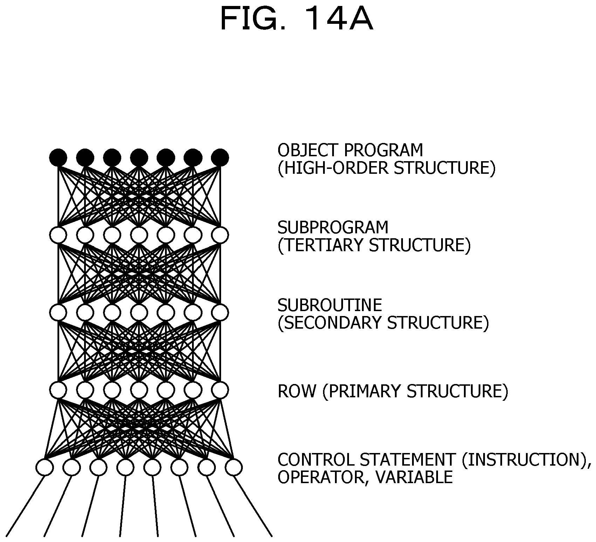

FIG. 14A is a diagram for describing hierarchy and granularity of subprograms, subroutines, and the like that constitute the object program. The object program (high-order structure) is obtained by linking a plurality of types of processing, and includes a plurality of subprograms (tertiary structure) in which functions of the respective types of processing are defined. Furthermore, similarly, the subprogram includes a plurality of subroutines (secondary structure), and the subroutine includes a plurality of rows (primary structure). Moreover, the row includes a control statement (instruction), an operator (+, -, or the like), a declaration statement (attribute), a variable, and the like, and has a hierarchical structure and each granularity.

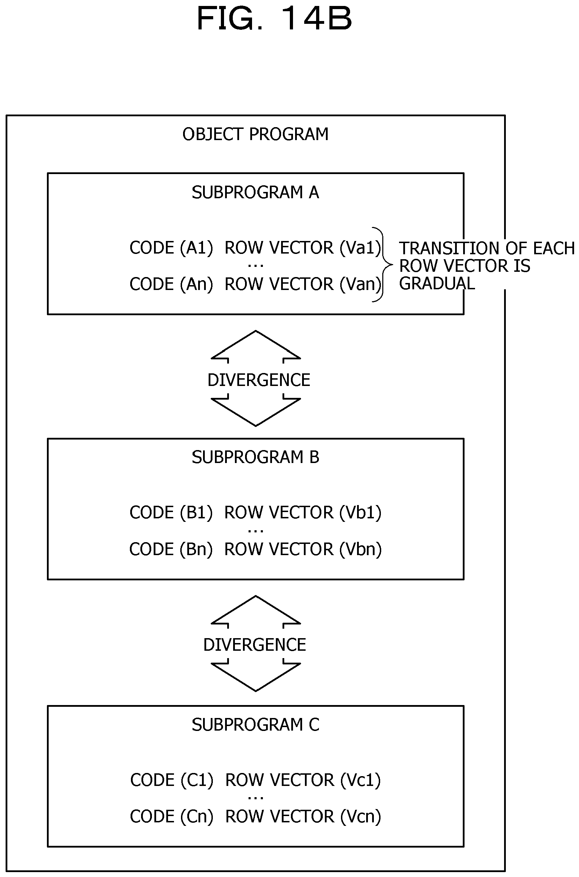

FIG. 14B is a diagram for describing relationships among the vectors of the respective subprograms included in the object program. In FIG. 14, the object program includes subprograms A, B, and C. The subprogram A includes codes (A1) to (An), and row vectors of the respective codes are set to Va1 to Van. Although not described in the first embodiment, the row vector is a vector obtained by integrating the vectors of the compression code sequence included in the rows of the subprograms. The subprogram B includes codes (B1) to (Bn), and row vectors of the respective codes are set to Vb1 to Vbn. The subprogram C includes codes (C1) to (Cn), and row vectors of the respective codes are set to Vc1 to Vcn.

In the present first embodiment, it is assumed that a transition of the (distributed) vectors is gradual in the order of appearance of the plurality of rows constituting the subprogram, but there is an irregular divergence between the vectors of the rows at the end and beginning adjacent at a boundary of each subprogram. For example, there is a divergence between a value of the row vector Van and a value of the row vector Vb1, and there is a divergence between a value of the row vector Vbn and a value of the row vector Vc1. By focusing on this transition of the vector, the plurality of subprograms constituting the object program may be divided.

### [Second Embodiment]

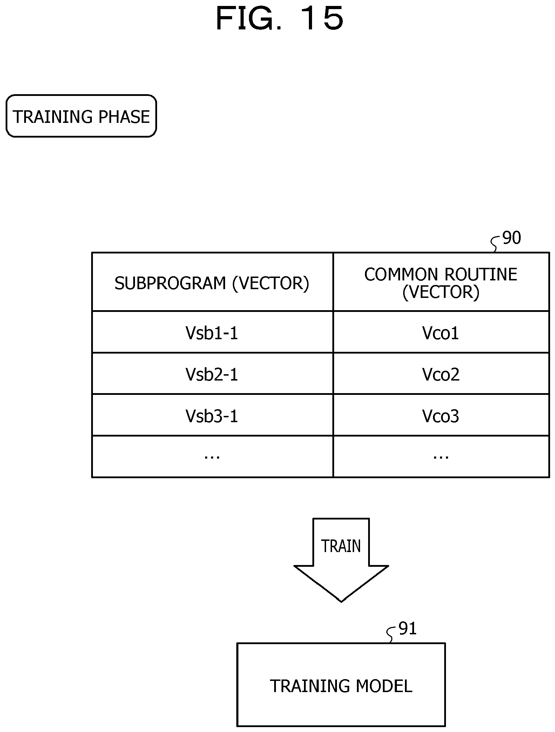

FIG. 15 is a diagram for describing an example of processing of a training phase of an information processing apparatus according to the present second embodiment. As illustrated in FIG. 15, the information processing apparatus executes training of a training model 91 by using training data 90. The training model 91 corresponds to a CNN, an RNN, or the like.

The training data 90 defines relationships between vectors of subprograms included in an object program and vectors of common routines. For example, the vectors of the subprograms correspond to input data, and the vectors of the plurality of common routines are correct answer values.

The information processing apparatus executes training by back propagation so that output when the vector of the subprogram is input to the training model 91 approaches the vector of each common routine. The information processing apparatus adjusts parameters of the training model 91 (executes machine learning) by repeatedly executing the processing described above based on the relationships between the vectors of the subprograms and the vectors of the common routines included in the training data 90.

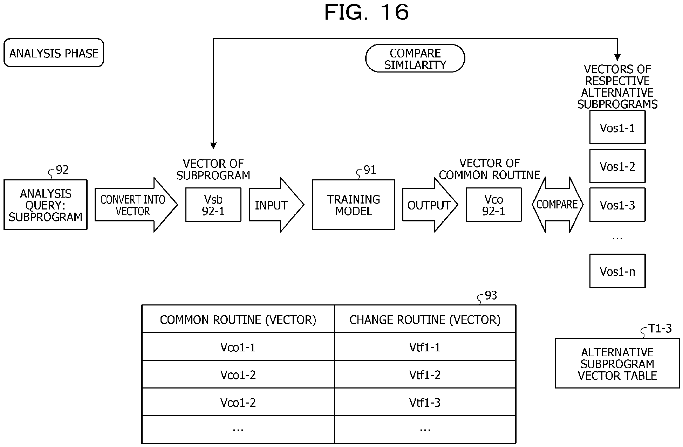

FIG. 16 is a diagram for describing processing of an analysis phase of the information processing apparatus according to the present second embodiment. The information processing apparatus according to the second embodiment may train the training model 70 in advance similarly to the information processing apparatus 100 of the first embodiment. Furthermore, as described with reference to FIG. 15, the information processing apparatus trains the training model 91 different from the training model 70. In a case where the vector of the analysis query (objective program) 80 is input, the training model 70 of the first embodiment outputs the vector of each subprogram. In a case where a vector of an analysis query (subprogram) 92 is input, the training model 91 outputs the vector of the common routine. The common routine is a code (character string data) common between the subprogram and an alternative subprogram.

When receiving the analysis query 92 specifying the subprogram, the information processing apparatus converts the subprogram of the analysis query 92 into a vector Vsb92-1 by using static dictionary information D1 and dynamic dictionary information D2. The information processing apparatus calculates a vector Vco92-1 corresponding to the common routine by inputting the vector Vsb92-1 of the subprogram to the training model 91.

Here, the information processing apparatus compares the vector Vsb92-1 of the subprogram with vectors of a plurality of alternative subprograms included in an alternative subprogram vector table T1-3. The alternative subprogram vector table T1-3 corresponds to the alternative subprogram vector table T1-3 described in the first embodiment.

The information processing apparatus specifies a vector of an alternative subprogram similar to the vector Vsb92-1 of the subprogram. For example, the vector of the alternative subprogram similar to the vector Vsb92-1 of the subprogram is set to Vos92-1. Then, it may be seen that the vector of the common routine common to the subprogram with the vector Vsb92-1 and the alternative subprogram with the vector Vos92-1 is the vector Vco92-1 output from the training model 91. Furthermore, a result of subtracting the vector Vco92-1 of the common structure from the vector Vos92-1 of the alternative subprogram is a vector of a different routine (vector of a change routine).

The information processing apparatus registers a relationship between the vector of the common routine and the vector of the change routine in a management table 93. The information processing apparatus generates the management table 93 by repeatedly executing the processing described above for the vector of each subprogram.

As described above, the information processing apparatus according to the present second embodiment calculates the vector of each common routine corresponding to the subprogram of the analysis query by inputting the vector of the analysis query 92 to the trained training model 91. Furthermore, by subtracting the vector of the common routine from the vector of the alternative subprogram similar to the subprogram, the vector of the change routine different between the subprogram and the alternative subprogram that are similar to each other is calculated. With this configuration, it is possible to calculate the common routine and the change routine between the subprogram and the alternative subprogram similar to the subprogram.

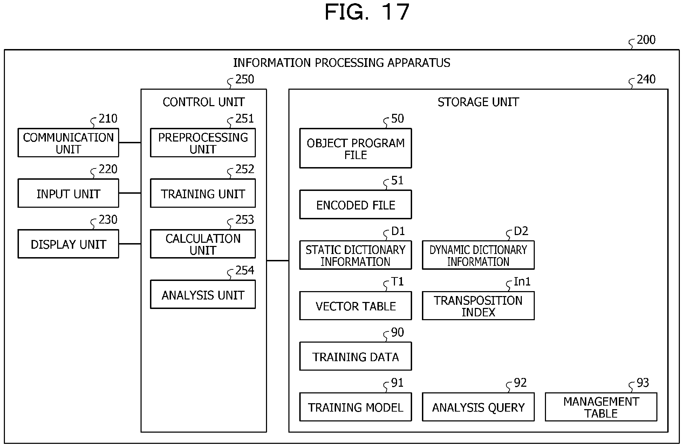

Next, an example of a configuration of the information processing apparatus according to the present second embodiment will be described. FIG. 17 is a functional block diagram illustrating the configuration of the information processing apparatus according to the present second embodiment. As illustrated in FIG. 17, this information processing apparatus 200 includes a communication unit 210, an input unit 220, a display unit 230, a storage unit 240, and a control unit 250.

Description regarding the communication unit 210, the input unit 220, and the display unit 230 is similar to the description regarding the communication unit 110, the input unit 120, and the display unit 130 in the first embodiment.

The storage unit 240 includes an object program file 50 and an encoded file 51. The storage unit 140 includes the static dictionary information D1 and the dynamic dictionary information D2. The storage unit 140 includes a vector table T1, a transposition index In1, the training data 90, the training model 91, the analysis query 92, and the management table 93. The storage unit 240 is implemented by, for example, a semiconductor memory element such as a RAM or a flash memory, or a storage device such as a hard disk or an optical disk.

Description regarding the object program file 50 and the encoded file 51 is similar to the contents described in the first embodiment. Description regarding the static dictionary information D1 and the dynamic dictionary information D2 is similar to the contents described in the first embodiment. Description regarding the vector table T1 and the transposition index In1 is similar to the contents described in the first embodiment. Description regarding the training data 90 is similar to the contents described with reference to FIG. 15. Description regarding the training model 91 and the analysis query 92 is similar to the contents described with reference to FIG. 16.

As described with reference to FIG. 16, the management table 93 holds the vectors of the common routines and the vectors of the change routines in association with each other. A vector obtained by adding the vector of the common routine and the vector of the change routine is the vector of the alternative subprogram.

The description returns to FIG. 17. The control unit 250 includes a preprocessing unit 251, a training unit 252, a calculation unit 253, and an analysis unit 254. The control unit 250 is implemented by, for example, a CPU or an MPU. Furthermore, the control unit 250 may be executed by, for example, an integrated circuit such as an ASIC or an FPGA.

Description regarding the preprocessing unit 251 is similar to the description of the processing regarding the preprocessing unit 151 in the first embodiment. By the preprocessing unit 251, the encoded file 51, the dynamic dictionary information D2, the vector table T1, and the transposition index In1 are generated. The preprocessing unit 251 may acquire the training data 90 from an external device, or the preprocessing unit 251 may generate the training data 90.

For example, the preprocessing unit 251 acquires an object program from the object program file 50, and specifies a subprogram included in the object program and a common routine included in the subprogram based on tag information set in the object program. Similarly to the preprocessing unit 151 of the first embodiment, the preprocessing unit 251 calculates a vector of the subprogram and a vector of the common routine, and registers the vector of the subprogram and the vector of the common routine in the management table 93 in association with each other.

The training unit 252 executes training of the training model 91 by using the training data 90. Processing of the training unit 252 corresponds to the processing described with reference to FIG. 16. The training unit 252 acquires, from the training data 90, a set of the vector of the subprogram and the vector of the common routine corresponding to the vector of the subprogram. The training unit 252 adjusts parameters of the training model 91 by executing training by back propagation so that a value of output of the training model 91 in a case where the vector of the subprogram is input to the training model 91 approaches a value of the vector of the common routine.

The calculation unit 253 divides, in the case of receiving specification of the analysis query 92, the subprogram included in the analysis query 92 into a plurality of reserved words and variables by executing morphological analysis. The calculation unit 253 specifies vectors corresponding to the respective reserved words and variables based on a division result, the static dictionary information D1, and the dynamic dictionary information D2, and calculates a vector of the analysis query 92 by integrating the specified vectors. Note that the calculation unit 253 may specify a subprogram corresponding to the subprogram included in the analysis query 92 from subprograms in a subprogram vector table T1-1, and use a vector of the specified subprogram as the vector of the analysis query 92.

The calculation unit 253 calculates the vector of the common routine by inputting the vector of the analysis query 92 to the training model 91. The calculation unit 253 outputs the calculated vector of the common routine to the analysis unit 254. In the following description, the vector of the common routine calculated by the calculation unit 253 is referred to as a "common routine vector".

The analysis unit 254 generates the management table 93 based on the vector of the subprogram of the analysis query 92, the common routine vector, and the alternative subprogram vector table T1-3. Hereinafter, an example of processing of the analysis unit 254 will be described.

The analysis unit 254 calculates each distance between the vector of the subprogram and each vector included in the alternative subprogram vector table T1-3, and specifies a vector whose distance to the vector of the subprogram is less than a threshold. The vector included in the alternative subprogram vector table T1-3, whose distance to the vector of the subprogram is less than the threshold, is referred to as a "similar vector".

The analysis unit 254 calculates the vector of the change routine by subtracting the common routine vector from the similar vector, and specifies a correspondence between the common routine vector and the vector of the change routine. The analysis unit 254 registers the common routine vector and the vector of the change routine in the management table 93. The analysis unit 254 generates the management table 93 by repeatedly executing the processing described above. The analysis unit 254 may output the management table 93 to the display unit 230 for display, or may transmit the management table 93 to an external device coupled to a network.

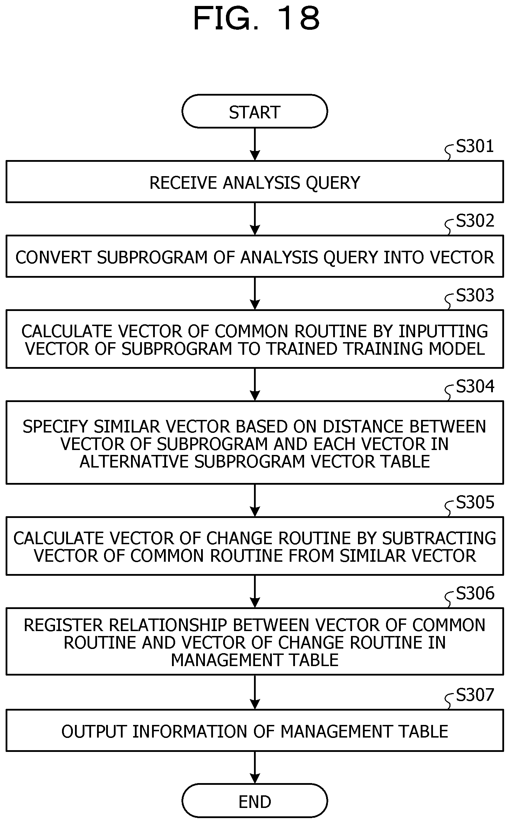

Next, an example of a processing procedure of the information processing apparatus 200 according to the present second embodiment will be described. FIG. 18 is a flowchart illustrating the processing procedure of the information processing apparatus according to the present second embodiment. The calculation unit 253 of the information processing apparatus 200 receives the analysis query 92 (Step S301).

The calculation unit 253 converts a subprogram of the analysis query 92 into a vector (Step S302). The calculation unit 253 calculates a vector of a common routine by inputting the vector of the subprogram to the trained training model 91 (Step S303).

The analysis unit 254 of the information processing apparatus 200 specifies a similar vector based on a distance between the vector of the subprogram and each vector in the alternative subprogram vector table T1-3 (Step S304).

The analysis unit 254 calculates a vector of a change routine by subtracting the vector of the common routine from the similar vector (Step S305). The analysis unit 254 registers a relationship between the vector of the common routine and the vector of the change routine in the management table 93 (Step S306). The analysis unit 254 outputs the information of the management table 93 (Step S307).

Next, an effect of the information processing apparatus 200 according to the present second embodiment will be described. The information processing apparatus 200 calculates the vector of each common routine corresponding to the subprogram of the analysis query by inputting the vector of the analysis query 92 to the trained training model 91. Furthermore, by subtracting the vector of the common routine from the vector of the alternative subprogram similar to the subprogram, the information processing apparatus 200 calculates the vector of the change routine different between the subprogram and the alternative subprogram that are similar to each other. With this configuration, it is possible to calculate the common routine and the change routine between the subprogram and the alternative subprogram similar to the subprogram.

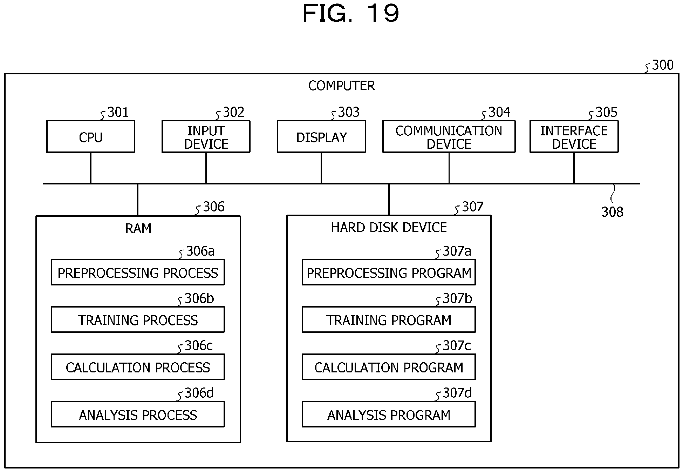

Next, an example of a hardware configuration of a computer that implements functions similar to those of the information processing apparatus 200 (100) indicated in the embodiments described above will be described. FIG. 19 is a diagram illustrating an example of the hardware configuration of the computer that implements the functions similar to those of the information processing apparatuses of the embodiments.

As illustrated in FIG. 19, a computer 300 includes a CPU 301 that executes various types of arithmetic processing, an input device 302 that receives data input from a user, and a display 303. Furthermore, the computer 300 includes a communication device 304 that exchanges data with an external device or the like via a wired or wireless network, and an interface device 305. Furthermore, the computer 300 includes a RAM 306 that temporarily stores various types of information, and a hard disk device 307. Additionally, each of the devices 301 to 307 is coupled to a bus 308.

The hard disk device 307 includes a preprocessing program 307a, a training program 307b, a calculation program 307c, and an analysis program 307d. Furthermore, the CPU 301 reads each of the programs 307a to 307d, and loads them in the RAM 306.

The preprocessing program 307a functions as a preprocessing process 306a. The training program 307b functions as a training process 306b. The calculation program 307c functions as a calculation process 306c. The analysis program 307d functions as an analysis process 306d.

Processing of the preprocessing process 306a corresponds to the processing of the preprocessing units 151 and 251. Processing of the training process 306b corresponds to the processing of the training units 152 and 252. Processing of the calculation process 306c corresponds to the processing of the calculation units 153 and 253. Processing of the analysis process 306d corresponds to the processing of the analysis units 154 and 254.

Note that each of the programs 307a to 307d may not necessarily be stored in the hard disk device 307 beforehand. For example, each of the programs is stored in a "portable physical medium" to be inserted in the computer 300, such as a flexible disk (FD), a CD-ROM, a DVD, a magneto-optical disk, or an IC card. Then, the computer 300 may read and execute each of the programs 307a to 307d.

### REFERENCE SIGNS LIST

- 100, 200: Information processing apparatus
- 110, 210: Communication unit
- 120, 220: Input unit
- 130, 230: Display unit
- 140, 240: Storage unit
- 150, 250: Control unit
- 151, 251: Preprocessing unit
- 152, 252: Training unit
- 153, 253: Calculation unit
- 154, 254: Analysis unit

## Claims

1. An information processing program that causes a computer to execute a process, the process comprising:
executing training of a training model based on training data that defines a relationship between a vector that corresponds to a program and a vector that corresponds to each of a plurality of subprograms that constitutes the program; and
calculating, in a case where a program to be analyzed is received, vectors of a plurality of subprograms that corresponds to the program to be analyzed by inputting the program to be analyzed to the training model.

2. The information processing program according to claim 1, wherein the process further comprising
analyzing alternative subprograms that are replaceable with the subprograms that constitute the program to be analyzed based on similarity between the vectors of the plurality of subprograms calculated and vectors of the plurality of alternative subprograms that are alternative candidates.

3. The information processing program according to claim 1,
wherein the program to be analyzed is indicated by information in which a plurality of reserved words and variables are combined, and
the process further comprising
executing processing of calculating a vector of the program to be analyzed by integrating vectors assigned to the plurality of reserved words and variables.

4. An information processing program that causes a computer to execute a process, the process comprising:
executing training of a training model based on training data that defines relationships between vectors of a plurality of subprograms that constitutes a program and vectors of common routines that indicate routines common between routines of the subprograms and routines of alternative subprograms; and
calculating, in a case where a subprogram to be analyzed is received, a vector of a common routine that corresponds to the subprogram to be analyzed by inputting a vector of the subprogram to be analyzed to the training model.

5. The information processing program according to claim 4, wherein the process further comprising:
searching for a vector of an alternative subprogram similar to the vector of the subprogram based on similarity between the vector of the subprogram and vectors of a plurality of alternative subprograms that are alternative candidates; and
calculating a vector of a change routine that indicates a code of a portion different between a routine of the subprogram and a routine of the searched alternative subprogram based on the searched vector of the alternative subprogram and the calculated vector of the common routine.

6. An information processing method executed by a computer, the information processing method comprising:
executing training of a training model based on training data that defines a relationship between a vector that corresponds to a program and a vector that corresponds to each of a plurality of subprograms that constitutes the program; and
calculating, in a case where a program to be analyzed is received, vectors of a plurality of subprograms that corresponds to the program to be analyzed by inputting the program to be analyzed to the training model.

7. The information processing method according to claim 6, wherein the process further comprising
analyzing alternative subprograms that are replaceable with the subprograms that constitute the program to be analyzed based on similarity between the vectors of the plurality of subprograms calculated and vectors of the plurality of alternative subprograms that are alternative candidates.

8. The information processing method according to claim 6,
wherein the program to be analyzed is indicated by information in which a plurality of reserved words and variables are combined, and
the process further comprising
executing processing of calculating a vector of the program to be analyzed by integrating vectors assigned to the plurality of reserved words and variables.

9. An information processing method that causes a computer to execute a process, the process comprising:
executing training of a training model based on training data that defines relationships between vectors of a plurality of subprograms that constitutes a program and vectors of common routines that indicate routines common between routines of the subprograms and routines of alternative subprograms; and
calculating, in a case where a subprogram to be analyzed is received, a vector of a common routine that corresponds to the subprogram to be analyzed by inputting a vector of the subprogram to be analyzed to the training model.

10. The information processing method according to claim 9, wherein the process further comprising:
searching for a vector of an alternative subprogram similar to the vector of the subprogram based on similarity between the vector of the subprogram and vectors of a plurality of alternative subprograms that are alternative candidates; and
calculating a vector of a change routine that indicates a code of a portion different between a routine of the subprogram and a routine of the searched alternative subprogram based on the searched vector of the alternative subprogram and the calculated vector of the common routine.

11. An information processing apparatus comprising:
a training unit that executes training of a training model based on training data that defines a relationship between a vector that corresponds to a program and a vector that corresponds to each of a plurality of subprograms that constitutes the program; and
a calculation unit that calculates, in a case where a program to be analyzed is received, vectors of a plurality of subprograms that corresponds to the program to be analyzed by inputting the program to be analyzed to the training model.

12. The information processing apparatus according to claim 11, further comprising an analysis unit that analyzes alternative subprograms that are replaceable with the subprograms that constitute the program to be analyzed based on similarity between the vectors of the plurality of subprograms calculated by the calculation unit and vectors of the plurality of alternative subprograms that are alternative candidates.

13. The information processing apparatus according to claim 11, wherein the program to be analyzed is indicated by information in which a plurality of reserved words and variables are combined, and the calculation unit further executes processing of calculating a vector of the program to be analyzed by integrating vectors assigned to the plurality of reserved words and variables.

14. An information processing apparatus comprising:
a training unit that executes training of a training model based on training data that defines relationships between vectors of a plurality of subprograms that constitutes a program and vectors of common routines that indicate routines common between routines of the subprograms and routines of alternative subprograms; and
a calculation unit that calculates, in a case where a subprogram to be analyzed is received, a vector of a common routine that corresponds to the subprogram to be analyzed by inputting a vector of the subprogram to be analyzed to the training model.

15. The information processing apparatus according to claim 14, further comprising an analysis unit that searches for a vector of an alternative subprogram similar to the vector of the subprogram based on similarity between the vector of the subprogram and vectors of a plurality of alternative subprograms that are alternative candidates, and calculates a vector of a change routine that indicates a code of a portion different between a routine of the subprogram and a routine of the searched alternative subprogram based on the searched vector of the alternative subprogram and the calculated vector of the common routine.
